Europäisches Patentamt

European Patent Office

Office européen des brevets

(11) Publication number: **0 655 850 A2**

## EUROPEAN PATENT APPLICATION

(21) Application number: 94203068.5

(22) Date of filing: 21.10.94

(51) Int. Cl.⁶: **H04L 25/49**, G11B 20/14

(30) Priority: 28.10.93 EP 93203014
31.01.94 EP 94200214

(43) Date of publication of application:
**31.05.95 Bulletin 95/22**

(84) Designated Contracting States:
**AT DE ES FR GB**

(71) Applicant: PHILIPS ELECTRONICS N.V.
Groenewoudseweg 1
NL-5621 BA Eindhoven (NL)

(72) Inventor: Ribeiro Filho, Milton de Andrade
c/o Int. Octrooibureau B.V.,
Prof. Holstlaan 6
NL-5656 AA Eindhoven (NL)
Inventor: Schouhamer Immink, Kornelis
Antonie
c/o Int. Octrooibureau B.V.,
Prof. Holstlaan 6
NL-5656 AA Eindhoven (NL)

(74) Representative: van der Kruk, Willem
Leonardus et al
INTERNATIONAAL OCTROOIBUREAU B.V.,
Prof. Holstlaan 6
NL-5656 AA Eindhoven (NL)

(54) **Transmission and reception of a digital information signal.**

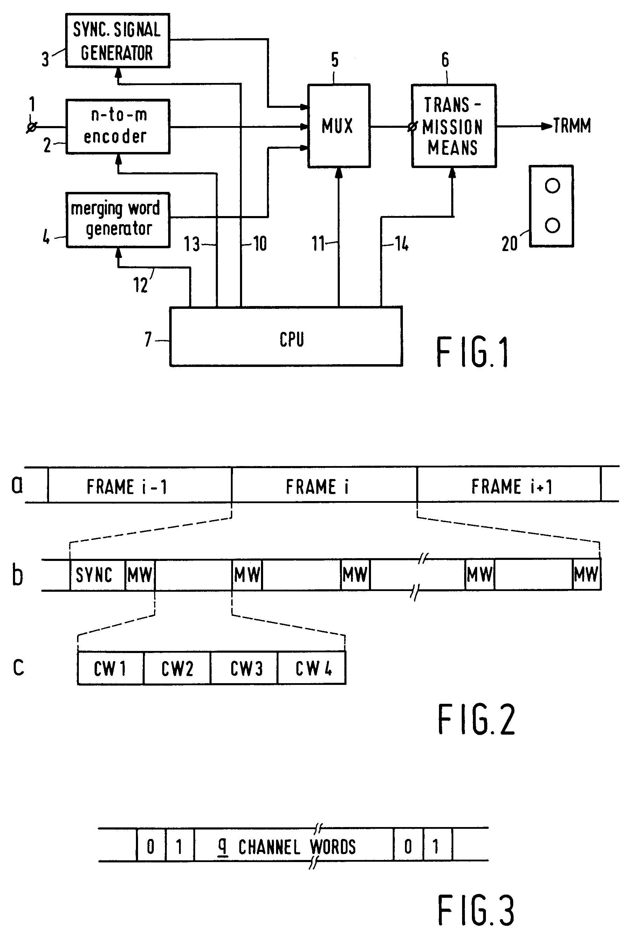

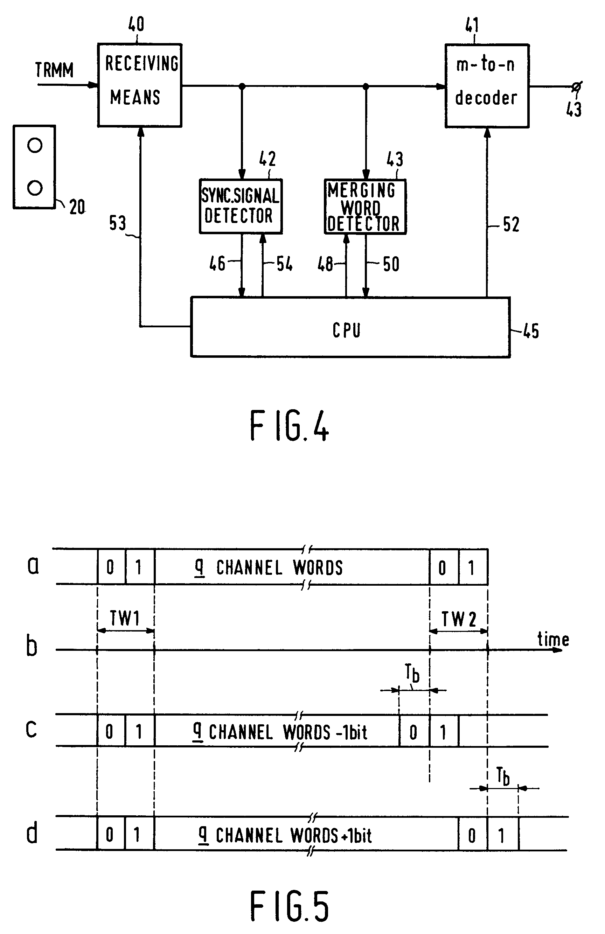

(57) A transmitter (fig.1) for transmitting a digital information signal is disclosed comprising an input terminal (1) for receiving the digital information signal, channel coding means (2) for converting n-bit information words in the digital information signal into m-bit channel words, where m and n are integers for which the following relation holds: $m > n$. Synchronizing signal generator means (3) are available for generating a synchronizing signal so as to obtain frames comprising a synchronizing signal and a number of channel words (CW1,CW2,...). Further merging means (4,5) for generating a p-bit merging word (MW) and for inserting the p-bit merging word between packets of q subsequent channel words each so as to obtain a channel signal. The channel signal is applied to transmission means (6) for applying the channel signal to a transmission medium (TRMM,20). p and q are integers. The merging word (MW) can be a fixed p-bit word, two neighbouring bits of the merging word being (a,b), where a is a bit of a first binary value, b being a bit of the second binary value. The merging words are used upon reception in a receiver (fig.4) so as to detect 1-bit insertions or deletions in the channel signal received, where $p = x + 1$. If the p-bit merging word is not a fixed p-bit word, the various p-bit merging words occur in a regularly recurring sequence.

FIG.1

The invention relates to a transmitter for transmitting a digital information signal, the transmitter comprising

- an input terminal for receiving the digital information signal,
- channel coding means for converting n-bit information words in the digital information signal into m-bit channel words, where m and n are integers for which the following relation holds: m>n,
- synchronizing signal generator means for generating a synchronizing signal so as to obtain frames comprising a synchronizing signal and a number of channel words,
- merging means for generating a p-bit merging word and for inserting the p-bit merging word between packets of q subsequent channel words each so as to obtain a channel signal,
- transmission means for applying the channel signal to a transmission medium, p and q being integers. The invention also relates to a record carrier that has been obtained by means of the transmitter, which is in the form of an arrangement of recording the digital information signal on the said record carrier. The invention further relates to a receiver for receiving the digital information signal.

The transmitter, the record carrier and the receiver, as defined in the foregoing, are known from published British patent application no. 2,083,322, document (1) in the list of references. Further technical details of the coding and decoding carried out in the known transmitter and receiver can be found in the publication titled 'Compact disc: system aspect and modulation' by J.P.J. Heemskerk et al in Philips Techn. Rev. 40, pp. 157-164, 1982, no.6, which is document (2) in the list of references.

More specifically, the above identified documents describe the coding method for the compact disc digital audio system, where $n(=8)$-bits information words are converted into $m(=14)$-bits channel words, and where 3-bit merging words are inserted between subsequent channel words. The choice for the 3-bit merging words is based on the requirements that, one the one hand the channel signal thus obtained is substantially DC free, and that further the runlength conditions for the channel signal are satisfied. In the compact disc system, those runlength conditions are $T_{min}=3$ and $T_{max}=11$, or: at least 2 and at the most 10 'zeroes' may be present between two subsequent 'ones' in the serial datastream of the channel signal. Various 3-bit bitarrays for the merging words are possible, but not all of the $2^3$ possible bitarrays are allowed. This for the reason that some of them do not satisfy the $T_{min}=3$ requirement, such as the bitarrays (1,1,1), (0,1,1), (1,0,1) and (1,1,0).

The invention aims at providing a transmitter which utilizes merging words for a different purpose.

The transmitter in accordance with the invention is characterized in that $p\geq2$ and the merging words having two neighbouring bits of opposite binary values. The invention is based on the following recognition.

In general in transmission systems, the synchronizing signal is a unique bitpattern and does not appear anywhere else in the serial datastream of the channel signal than at the beginning of the frames. So, only by detecting the synchronizing signals in the serial datastream of the channel signal received, the receiver is capable of determining whether it is in synchronization or not.

A possible source of errors in digital transmission systems, such as in digital magnetic recording, is the occurrence of insertions or deletions. A failure in the time-base recovery circuit of the receiver causes one or more bits of the incoming channel signal to be deleted (the deletions) or to be added (the insertions). Insertions and deletions are specially concerning, as they cause error propagation through loss of synchronization.

In some digital transmission systems, such as the Digital Compact Cassette system (DCC), the occurrence of 1-bit or 2-bit insertions or deletions is common. The present invention aims at minimizing the error propagation caused by the insertions and deletions through the use of a merging word as a local synchronization pattern. The merging word used can be a Fixed p-bit sequence, which is inserted between every q subsequent channel words.

For detecting 1-bit insertions or deletions a 2-bit merging word suffices, which can be the word (0,1) or (1,0). Preferably, q is larger than 1, in order not to reduce the efficiency of the encoding too much.

For detecting 2-bit insertions or deletions a 3-bit merging word suffices.

The receiver for receiving a digital information signal, comprising

- receiving means for receiving a channel signal,
- synchronising signal detector means for detecting a synchronizing signal so as to identify frames in said channel signal, the channel signal being in the form of subsequent frames, each frame comprising the synchronizing signal, a number of m-bit channel words being included in each frame and a p-bit merging word being inserted between packets of q subsequent channel words in said channel signal, where p and q are integers,

- channel decoding means for reconverting m-bit channel words in the channel signal into n-bit information words, so as to obtain the digital information signal, where m and n are integers for which the following relation holds: m>n,
- an output terminal for supplying the digital information signal

is characterized in that the receiver comprises merging word detector means, the merging word detector means being adapted to detect a merging word at that location in the serial datastream of the channel signal where a merging word should occur and being adapted to detect a shift in the serial datastream of x bittimes of the serial datastream from the actual location of the said merging word, and to generate a first or a second control signal upon detection of a shift of the serial datastream over said x bittimes in a forward or backward direction respectively, that $p = x + 1$, m, n, p and x being integers larger than zero and the merging words having two neighbouring bits of opposite binary values.

The first and second control signal generated can be used in a further embodiment, which is characterized in that it further comprises timing means for generating time pulses for supplying the time pulses to the channel decoding means, the timing means being adapted to shift the moments of occurrence of the time pulses in time in the forward or backward direction over said x bittimes, in response to the first and second control signal respectively.

In another embodiment of the invention, the merging words inserted in the channel signal are not fixed, in that different p-bit merging words are inserted in a regularly recurring sequence in said channel signal.

Further aspects of the invention will be described in the following figure description, in which

figure 1 shows an embodiment of the transmitter,

figure 2 shows the channel signal generated by the transmitter,

figure 3 shows the serial datastream of the channel signal, comprising the channel words and 2-bit mergings words merged between each time a packet of q channel words,

figure 4 shows an embodiment of the receiver,

figure 5 shows in (a) the channel signal comprising 2-bit merging words, in (b)the time windows for detecting the merging words, in (c) the channel signal in which a 1-bit deletion occurs, and in (d) the channel signal in which a 1-bit insertion occurs,

figure 6 shows in (a) the channel signal comprising 3-bit merging words, in (b) the time windows for detecting the merging words, in (c) the channel signal in which a 2-bit deletion occurs, and in (d) the channel signal in which a 2-bit insertion occurs, and

figure 7 shows another example of the channel signal including different 2-bit merging words in a regularly recurring sequence.

Figure 1 shows an embodiment of the transmitter, having an input terminal 1 for receiving a digital information signal. The transmitter further having an n-to-m encoder 2, having an input coupled to the input terminal 1, a synchronizing signal generator 3, which generates a synchronization word at its output, a merging word generator 4, which generates a p-bit merging word at its output, and a multiplexer 5. Outputs of the synchronizing signal generator 3, the n-to-m encoder 2 and the merging word generator 4 are coupled to corresponding inputs of the multiplexer 5. An output of the multiplexer 5 is coupled to a transmission means 6. The transmission means 6 applies the channel signal applied to its input to a transmission medium TRMM, in response to a control signal applied by a central processing unit CPU 7 via the line 14. The central processing unit (CPU) 7 is provided for controlling the various units in the transmitter, by means of control signals supplies via the control lines from the CPU 7 to those units.

The transmitter can be in the form of a transmitter for transmitting the channel signal applied to the input of the transmission means 6 via a wireless transmission connection. In that case, the transmission means 6 comprises an antenna and an antenna amplifier. The transmission medium TRMM can also be an optical fibre, or a magnetic or optical record carrier. In the latter case, the transmission means 6 comprises a magnetic or an optical write head for writing the channel signal in a track on the record carrier. Figure 1 shows, as an example, a magnetic record carrier as a transmission medium, which is accommodated in a cassette 20.

The n-to-m encoder 2 is well known, and the relation between n and m is such that m>n. The encoder 2 converts n-bit information words applied to its input into m-bit channel words which are applied to its output. As an example, an 8-to-10 encoder is described in US patent specification no. 4,620,311, which is document (3) in the list of references.

The sync signal generator 3 generates a synchronizing signal, a sync word 'SYNC' (see (b) in figure 2) and the merging word generator 4 generates the p-bit merging word MW.

Figure 2 shows the signal format of the channel signal generated by the transmitter of figure 1, which channel signal is applied to the input of the transmission means 6 for transmission. (a) in figure 2 shows the channel signal being built up of frames having the sequence numbers ..., i-1, i, i+1, ... (b) in figure 2 shows the contents of a frame, which comprises a synchronizing signal, the syncword SYNC, a number of merging words MW and a number of channel words. Those channel word can be found in (c) in figure 2. As can be seen from figure 2, the channel words in a frame are divided into packets of q channel words each (where q in the present example is 4), such as the channel words cw1, cw2, cw3 and cw4, by means of merging the merging words MW in the datastreem of the channel words.

Figure 3 shows how a 2-bit merging word (0,1) is merged in the datastream of the channel words. Figure 3 shows only one packet of the q channelwords surrounded by the two merging words.

The transmitter of figure 1 functions as follows. For generating a frame of the channel signal, the CPU supplies a control signal via the control signal line 10 to the generator 3, so that it generates the synchronizing signal (the sync word SYNC) at its output. The CPU also supplies a switching control signal via the line 11 to the multiplexer 5, so that it interconnects the output of the generator 3 to the input of the transmission means 6. The SYNC signal can now be applied to the transmission means 6 for transmission. Next, the CPU supplies a control signal via the control signal line 12 to the merging word generator 4, so that a p-bit merging word is supplied to the output of the generator 4. The CPU 7 now supplies a switching control signal to the multiplexer 5, under the influence of which the multiplexer interconnects the output of the generator 4 with the input of the transmission means 6. The first merging word of the frame can now be applied to the transmission medium TRMM. Next, the CPU 7 generates a control signal which is applied to the encoder 2 via the control signal line 13. Under the influence of this control signa, the encoder 2 converts q n-bit information words received via the input terminal 1 into q m-bit channel words and supplies those q m-bit channel words to its output. Under the influence of a switching control signal from the CPU 7, the multiplexer 5 interconnects the output of the encoder 2 with the input of the transmission means 6, so that the q m-bit channel words can be supplied to the transmission medium.

Next, the CPU 7 generates a control signal via the line 12, so that again a merging word is generated. Under the influence of a switching control signal via the line 11, the said merging word is applied to the transmission means 6, via the multiplexer 5, so as to enable the transmission of that merging word. Again, a number of q n-bit information words are converted into q m-bit channel words by the encoder 2 under the influence of a control signal supplied via the line 13. Those channel words are supplied to the transmission means 6 via the multiplexer 5 under the influence of a switching control signal applied via the line 11 to the multiplexer 5. This functioning is continued, until the next frame must be generated, which starts with the generation of a sync signal by the generator 3 under the influence of a control signal supplied via the line 10 to the generator 3.

Figure 4 shows an embodiment of a receiver. The receiver comprises receiving means 40 for receiving the channel signal transmitted via the transmission medium TRMM. The receiving means 40 can be a antenna, in the case of wireless transmission, or, in the case of transmission via a record carrier, a read head. That is a magnetic or an optical read head in the case of a magnetic or an optical record carrier respectively. Figure 4 shows, as an example, the magnetic record carrier which is accommodated in the cassette 20. The receiving means 40 has a output coupled to an input of an m-to-n decoder 41. The decoder 41 is for reconverting m-bit channel words in the channel signal into n-bit information words, so as to obtain a regenerated digital information signal at an output. This output is coupled to an output terminal 43 on which the regenerated digital information signal is available.

The receiver further comprises a sync signal detector 42 and a merging word detector 43. A central processing unit CPU 45 is provided for controlling the various units in the receiver.

The receiving means 40 functions in response to a control signal applied by the CPU 45 via the line 53 and supplies the channel signal received to the sync detector 42, the merging word detector 43 and the m-to-n decoder 41. The sync detector 42 detects the sync words SYNC in the channel signal received via the receiving means 40, and generates a detection signal upon detection of a sync word, which detection signal is supplied to the CPU 45 via the control signal line 46. In response to the detection signal received via the line 46, the system is capable to lock the timing in the receiver on the channel signal received. The CPU 45 supplies a control signal via the control signal line 48 to the merging word detector 43 so as to generate a time window in which the merging words are expected to occur. The merging word detector 43 is adapted to detect the merging words occurring within the time window. The decoder 41 reconverts the m-bit channel words into n-bit information words in response to a control signal applied by the CPU 45 via the line 52.

The CPU 45 generates time pulses to the decoder 41 via the line 52 so as to control the decoding of the subsequent m-bit channel words into n-bit information words. Further, the CPU 45 generates timing signals to the detectors 42 and 43 so as to realize a window function in each of the detectors 42 and 43 for detecting the sync words and the merging words.

Figure 5 shows how the detection of the merging word can take place. In (b) of figure 5, the time axis is shown and two subsequent time windows TW1 and TW2 in which a merging word is expected to occur are given. (a) of figure 5 shows the serial datastream of the channel signal, which is the same channel signal as shown in figure 3. It is assumed that there are no insertions or deletions in the channel signal of (a) in figure 5. The channel signal is thus correctly in timing, and the 2-bit merging words (0,1) exactly fall within the time windows TW1 and TW2.

(c) in figure 5 shows the situation where a 1-bit deletion has occurred in the sequence of the q channel words that follows the merging word detected in the time window TW1. That means that the channel signal following the 1-bit deletion has been shifted in time over one bitperiod $T_b$ to the left in the figure. Detection of the merging word in the time window TW2 results in the detection of a (1,X) pattern, where X can be either '0' or '1'.

(d) in figure 5 shows the situation where a 1-bit insertion has occurred in the sequence of q channel words that follows the merging word detected in the time window TW1. That means that the channel signal following the 1-bit insertion has been shifted in time over one bitperiod $T_b$ to the right in the figure. Detection of the merging word in the time window TW2 results in the detection of a (X,0) pattern, where X can be either '0' or '1'.

When detecting once a '1X' pattern in the time window TW2, in accordance with the situation of (c) of figure 5, the conclusion could be taken that a 1-bit deletion has occurred. In response to such detection, the detector 43 could generate a first control signal, which is applied to the CPU 45 via the control signal line 50. In response to this first control signal, the CPU 45 could change the timing by one bittime. This results in the supply of timing signals to the detectors 42 and 43 and the decoder 41 which are 'speeded up' by one bittime, so that the system is again in timing. It is however preferred to detect the merging words in more than one time window, such as a time window TW3 (not shown) that follows the time window TW2. As an example, it is preferable to detect the merging words in two subsequent timing windows TW2 and TW3, and to issue the first control signal if in both time windows TW2 and TW3 a (1,X) pattern has been detected.

When detecting once a (X,0) pattern in the time window TW2, in accordance with the situation of (d) in figure 5, the conclusion could be taken that a 1-bit insertion has occurred. In response to such detection, the detector 43 could generate a second control signal, which is applied to the CPU 45 via the control signal line 50. In response to this second control signal, the CPU 45 could change the timing by one bittime. This results in the supply of timing signals to the detectors 42 and 43 and the decoder 41 which are delayed by one bittime, so that the system is again in timing. As said already above, it is however preferred to detect the merging words in more than one time window. As an example, it is preferable to detect the merging words in two subsequent timing windows TW2 and TW3 (not shown), and to issue the first control signal if in both time windows TW2 and TW3 a (X,0) pattern has been detected.

By detecting the merging words in at least two subsequent time windows, an increased detection accuracy has been obtained, so that erroneous decisions in the detector 43 will be minimized. This can be explained as follows.

Suppose that the situation as given in (c) in figure 5 occurs, and that a 2-bit pattern (1,0) is detected in the time window TW2. The question now arises: has a 1-bit deletion has occurred, in which case the second bit, which is the '0'-bit, comes from the first bit of the first channel word in the packet following the merging word. Or the question arises: has a 1-bit insertion occurred, in which case the first bit, which is the '1'-bit, comes from the last bit of the last channel word in the packet preceding the merging word.

Detection of the merging word in the time window TW3 can give a further indication whether a 1-bit insertion or a 1-bit deletion has occurred. Suppose that the detector 43 detects a bitpattern (1,1) in the time window TW3. In this case, the system could conclude that a 1-bit deletion has occurred, because in both 2-bit patterns detected, the first bit is a '1', whereas the second bit is not the same. Suppose now that the second bit pattern detected in the time window TW3 is again (1,0). In this situation, it is equally well possible that the situation of (d) in figure 5 existed. Consequently, no decision whether a 1-bit insertion or a 1-bit deletion occurred, can be taken yet. So, the detection results of the bit patterns occurring in following time windows are needed to come to a conclusion.

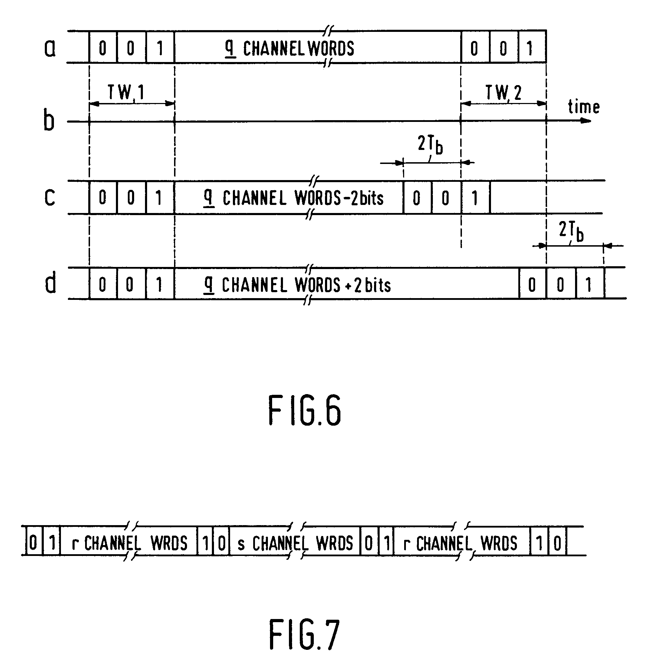

For detecting 2-bit insertions or deletions, a 3-bit fixed merging word is required. This merging word can be (0,0,1) or (1,1,0). Figure 6 shows how the detection of the 3-bit merging word (0,0,1) can take place. In (b) of figure 6, the time axis is shown and two subsequent time windows TW1 and TW2 in which a merging word is expected to occur are given. The time windows are now at least three bittimes long. (a) of figure 6 shows the serial datastream of the channel signal, which is the same channel signal as shown in figure 3, with the exception that 3-bit merging words are now merged between each time q channel words. It is assumed that there are no insertions or deletions in the channel signal of (a) in figure 6. The channel signal is thus correctly in timing, and the 3-bit merging words (0,0,1) exactly fall within the time windows TW1 and TW2.

One bit insertions and deletions can be detected using the 2-bit (0,1)-sequence in the 3-bit merging word (0,0,1), in the way as described above with reference to figure 5.

(c) in figure 6 shows the situation where a 2-bit deletion has occurred in the sequence of the q channel words that follows the merging word detected in the time window TW1. That means that the channel signal following the 2-bit deletion has been shifted in time over two bitperiods $T_b$ to the left in the figure. Detection of the merging word in the time window TW2 results in the detection of a (1,X,Y) pattern, where X and Y can each be either '0' or '1'.

(d) in figure 5 shows the situation where a 2-bit insertion has occurred in the sequence of q channel words that follows the merging word detected in the time window TW1. That means that the channel signal following the 2-bit insertion has been shifted in time over two bitperiods $T_b$ to the right in the figure. Detection of the merging word in the time window TW2 results in the detection of a (X,Y,0) pattern, where X and Y can each be either '0' or '1'.

When detecting once a (1,X,Y) pattern in the time window TW2, in accordance with the situation of (c) of figure 6, the conclusion could be taken that a 2-bit deletion has occurred. In response to such detection, the detector 43 could generate a third control signal, which is applied to the CPU 45 via the control signal line 50. In response to this third control signal, the CPU 45 changes the timing by two bittimes. This results in the supply of timing signals to the detectors 42 and 43 and the decoder 41 which are 'speeded up' by two bittimes, so that the system is again in timing.

Suppose however, that a bit pattern (1,0,0) was detected in the time window TW2 of figure 6. This bit pattern can be the result of a 2-bit deletion or could be the result of a 1-bit or 2-bit insertion, as a 1-bit insertion results in a (X,0,0) bit pattern and a 2-bit insertion results in a (X,Y,0) bit pattern.

It is therefore preferred to detect the merging words in more than one time window, such as a time window TW3 (not shown) that follows the time window TW2. As an example, it is preferable to detect the merging words in two subsequent timing windows TW2 and TW3, and to issue the third control signal if in both time windows TW2 and TW3 a (1,X,Y) pattern has been detected.

When detecting once a (X,Y,0) pattern in the time window TW2, in accordance with the situation of (d) in figure 6, the conclusion could be taken that a 2-bit insertion has occurred. In response to such detection, the detector 43 could generate a fourth control signal, which is applied to the CPU 45 via the control signal line 50. In response to this fourth control signal, the CPU 45 changes the timing by two bittimes. This results in the supply of timing signals to the detectors 42 and 43 and the decoder 41 which are delayed by two bittimes, so that the system is again in timing. As said already above, it is however preferred to detect the merging words in more than one time window. As an example, it is preferable to detect the merging words in two subsequent timing windows TW2 and TW3 (not shown), and to issue the first control signal if in both time windows TW2 and TW3 a (X,Y,0) pattern has been detected.

By detecting the merging words in at least two subsequent time windows, an increased detection accuracy has been obtained, so that erroneous decisions in the detector 43 will be minimized.

Figure 7 shows the merging of 2-bit merging words (0,1) and (1,0) so as to obtain a serial datastream of channel words. In the embodiment of figure 7, alternately merging words (0,1) and (1,0) are inserted in the serial datastream. As can be seen in figure 7, r channel words are included between the merging word (0,1) and the merging word (1,0), followed by s channel words being included between the merging word (1,0) and the following merging word (0,1). This merging word is again followed by a packet of r channel words between this merging word and the next merging word (1,0). r and s are integers larger than zero. r can be equal to s. For q larger than one, the following relation could hold: $q = r + s$.

Detection of the merging words in the channel signal of figure 7 by a merging word detector, such as the merging word detector 43 of figure 4 is possible when being in synchronization. If the merging word detector has detected a merging word (0,1), it knows that the next merging word must be (1,0). Further, coming into synchronization is realized by detecting the synchronization word. Moreover, when having detected the sync word, the next two bits following the sync word in the embodiment of figure 2b is the first merging word, so that the detector 43 knows which of the two merging words comes first in that frame.

It will be evident that each other regular sequence of the two 2-bit merging words in the serial datastream is possible, as long as the sequence has a certain fixed repetition period, is standardized and is known by the receiver, so that it can detect the 2-bit merging words in this sequence.

It will be evident that the same discussion holds for merging (at least two) different 3(or more)-bit merging words in a regular sequence in the serial datastream.

It should be noted that different decision strategies are possible to determine whether an insertion or a deletion has occurred, going out from the bit arrays detected by the merging word detector 43 in the time windows. As a result of the merging of the merging words in the serial datastream, it has become possible to realize a quick detection mechanism for the detection of the presence of insertions and deletions.

A general characterization of the invention is that in order to detect bitslips over x bittimes in the serial datastream of the signal received, it is necessary to insert p-bit merging words, where p is equal to or larger than x + 1.

Further, the choice for the number q of words in a packet depends on the one hand on the efficiency of the coding that is required, and on the other hand on the expected rate of occurrence of the bitslips.

Going out from an 8-to-10 channel encoding in the encoder 2, merging 2 bits merging words between packets of 2 10-bit channel words results effectively in a 2-to-11 encoding, which is a 10 percent decrease in efficiency. Merging 3-bit merging words in the serial datastream requires 3 10-bit channel words in a packet in order not to have a larger loss in efficiency than 10 percent.

If it is expected that the occurrence of bitslips is very rare, this enables more words to be inserted in a packet, that is: q can be a large value, such as 4 or 5, as an example. On the other hand, if the bitslips occur very regularly, it is required to have less words in a packet, so that a bitslip is detected more quickly, that is: q will have a lower value, such as 2 or 3, as an example.

References

List of related documents, to be printed on the front page of the patent document.

(1) British patent application no. 2,083,322 (PHQ 80,007)

(2) 'Compact disc: system aspect and modulation' by J.P.J. Heemskerk et al in Philips Techn. Rev. 40, pp. 157-164, 1982, no.6

(3) US patent specification no. 4,620,311 (PHN 11,117)

**Claims**

1. Transmitter for transmitting a digital information signal, the transmitter comprising
   - an input terminal for receiving the digital information signal,
   - channel coding means for converting n-bit information words in the digital information signal into m-bit channel words, where m and n are integers for which the following relation holds: m > n,
   - synchronizing signal generator means for generating a synchronizing signal so as to obtain frames comprising a synchronizing signal and a number of channel words,
   - merging means for generating a p-bit merging word and for inserting the p-bit merging word between packets of q subsequent channel words each so as to obtain a channel signal,
   - transmission means for applying the channel signal to a transmission medium, p and q being integers,

characterized in that p≥2 and the merging words having two neighbouring bits of opposite binary values.

2. Transmitter as claimed in claim 1, characterized in that the merging word is a fixed p-bit word.

3. Transmitter as claimed in claim 1 or 2, characterized in that q > 1.

4. Transmitter as claimed in claim 2 or 3 as far as dependent of claim 2, characterized in that p = 2 and the merging word equals (0,1).

5. Transmitter as claimed in claim 2 or 3 as far as dependent of claim 2, characterized in that p = 2 and the merging word equals (1,0).

6. Transmitter as claimed in claim 2 or 3 as far as dependent of claim 2, characterized in that three neighbouring bits of the merging word being (a,a,b), where a is a bit of a first binary value and b being a bit of the second binary value.

7. Transmitter as claimed in claim 2 or 3 as far as dependent of claim 2, characterized in that three neighbouring bits of the merging word being (a,b,b), where a is a bit of a first binary value and b being a bit of the second binary value.

8. Transmitter as claimed in claim 6 or 7, characterized in that p = 3 and that a equals '0'.

9. Transmitter as claimed in claim 6 or 7, characterized in that p = 3 and that a equals '1'.

10. Transmitter as claimed in claim 1 or 3 as far as dependent of claim 1, characterized in that p = 2.

11. Transmitter as claimed in claim 10, characterized in that each second merging word in the channel signal equals (0,1) and the intermediate merging words in the channel signal equal (1,0).

12. Transmitter as claimed in any one of the preceding claims, characterized in that it is in the form of an arrangement for recording the digital signal in a track on a record carrier, the transmission means being in the form of recording means for recording the channel signal in the track on said record carrier.

13. Record carrier that have been obtained by means of the transmitter as claimed in claim 12, characterized in that it has a channel signal recorded in a track, the channel signal being in the form of subsequent frames, each frame comprising a synchronizing signal, a number of m-bit channel words being included in each frame, and a p-bit merging word being inserted between packets of q subsequent channel words, that p≥2, that the merging word is a fixed p-bit word, and the merging words having two neighbouring bits of opposite binary values.

13. Receiver for receiving a digital information signal, comprising

- receiving means for receiving a channel signal,
- synchronizing signal detector means for detecting a synchronizing signal so as to identify frames in said channel signal, the channel signal being in the form of subsequent frames, each frame comprising the synchronizing signal, a number of m-bit channel words being included in each frame and a p-bit merging word being inserted between packets of q subsequent channel words in said channel signal, where p and q are integers,
- channel decoding means for reconverting m-bit channel words in the channel signal into n-bit information words, so as to obtain the digital information signal, where m and n are integers for which the following relation holds: m>n,
- an output terminal for supplying the digital information signal,

characterized in that the receiver comprises merging word detector means, the merging word detector means being adapted to detect a merging word at that location in the serial datastream of the channel signal where a merging word should occur and being adapted to detect a shift in the serial datastream of x bittimes of the serial datastream from the actual location of the said merging word, and to generate a first or a second control signal upon detection of a shift of the serial datastream over said x bittimes in a forward or backward direction respectively, that p = x + 1, m, n, p and x being integers larger than zero and the merging words having two neighbouring bits of opposite binary values.

14. Receiver as claimed in claim 13, characterized in that it further comprises timing means for generating time pulses for supplying the time pulses to the channel decoding means, the timing means being adapted to shift the moments of occurrence of the time pulses in time in the forward or backward direction over said x bittimes, in response to the first and second control signal respectively.

15. Receiver as claimed in claim 13 or 14, characterized in that p = 2 and the merging word equals (0,1), the merging word detector means being adapted to detect a shift of one bittime of the serial datastream and to generate said first or second control signal upon detection of the shift over said one bittime in the forward or backward direction respectively.

16. Receiver as claimed in claim 13 or 14, characterized in that p = 2 and the merging word equals (1,0), the merging word detector means being adapted to detect a shift of one bittime of the serial datastream and to generate said first or second control signal upon detection of the shift over said one bittime in the forward or backward direction respectively.

17. Receiver as claimed in claim 13 or 14, characterized in that p = 2 and that each second merging word in the channel signal equals (0,1) and the intermediate merging words equal (1,0), the merging word detector means being adapted to detect said two merging words and to detect a shift of one bittime of the serial datastream and to generate said first or second control signal upon detection of the shift over said one bittime in the forward or backward direction respectively.

18. Receiver as claimed in claim 13 or 14, characterized in that p = 3, the three neighbouring bits of the merging word being (a,a,b), the merging word detector means being adapted to detect a shift of two bittimes of the serial datastreem and to generate said first or second control signal upon detection of the shift over said two bittimes in the forward or backward direction respectively.

19. Receiver as claimed in claim 13 or 14, characterized in that p = 3, the three neighbouring bits of the merging word being (a,b,b), the merging word detector means being adapted to detect a shift of two bittimes of the serial datastream and to generate said first or second control signal upon detection of the shift over said two bittimes in the forward or backward direction.

20. Receiver as claimed in claim 18 or 19, characterized in that a equals '0'.

21. Receiver as claimed in claim 18 or 19, characterized in that a equals '1'.

22. Receiver as claimed in claim 13 or 14, characterized in that p = 3 and that the channel signal comprises at least two different 3-bit merging words included in a regular sequence in the serial datastream of the channel signal, the merging word detector means being adapted to detect said at least two 3-bit merging words in said channel signal and to generate said First or second control signal upon detection of the shift over two bittimes in the forward or backward direction respectively.

23. Receiver as claimed in claim 18, 19 or 22, characterized in that the merging word detector means is further adapted to detect a shift in the serial datastream of one bittime of the channel signal from the actual location of said merging word and to generate a third and a fourth control signal upon detection of a shift of the serial datastream over one bittime in the forward or backward direction respectively.

**24.** Receiver as claimed in claim 23, characterized in that the timing means are further adapted to shift the moments of occurrence of the time pulses over said one bittime in said forward or backward direction, in response to the third and fourth control signal respectively.

**25.** Receiver as claimed in any one of the preceding claims 13 to 24, characterized in that it is in the form of a arrangement for reproducing the digital signal from a track on a record carrier, the receiving means being in the form of reproducing means for reproducing the channel signal from the track on said record carrier.

FIG.1

FIG.2

FIG.3

FIG.4

FIG.5

FIG.6

FIG.7